# EUROPÄISCHE PATENTANMELDUNG

(11) **EP 2 957 858 A1**
(43) Veröffentlichungstag der Anmeldung: **23.12.2015**
(21) Anmeldenummer: 15170287.5
(22) Anmeldetag: 02.06.2015
(51) Int. Cl.: G01B 11/12

(54) **VERFAHREN UND MESSVORRICHTUNG ZUM ÜBERPRÜFEN EINER ZYLINDERBOHRUNG**

(30) Priorität: 16.06.2014 DE 102014108431
(71) Anmelder: Ziemann & Urban GmbH, 85452 Moosinning (DE)
(72) Erfinder: Welzenbach, Martin, 85456 Wartenberg (DE); Kammerl, Arnold, 80995 München (DE); Wagener, Dr. Wolfram, 34305 Niedenstein (DE); Hofstetter, Rudolf, 84048 Mainburg (DE)
(74) Vertreter: Graf Glück Kritzenberger

(57) **Zusammenfassung**

Die Erfindung betrifft ein Verfahren zum Überprüfen der Lauffläche einer thermisch oder galvanisch beschichteten Zylinderbohrung (14) auf aus der Lauffläche hervorstehende Fehlerstellen (Spots) und zum Überprüfen des Durchmessers der Zylinderbohrung (14) mit einer Messvorrichtung (10), die wenigstens eine zweite Strahlungsquelle (42) und wenigstens eine erste Strahlungsquelle (18) und wenigstens eine zum axialen Bewegen in der Zylinderbohrung konzipierte Erfassungseinrichtung (26) enthält, bei welchem Verfahren die Lauffläche (24) der Zylinderbohrung (14) an axial unterschiedlichen Stellen durch die erste und zweite Strahlungsquelle in einem Winkel von 15 bis 75 Grad zur Achse der Zylinderbohrung bestrahlt und der Auftreffbereich der Strahlen auf der Lauffläche von der Erfassungseinrichtung beim axialen Bewegen in der Zylinderbohrung erfasst (34) wird, wobei als Erfassungseinrichtung eine Kamera mit einer zur Achse der Zylinderbohrung in etwa orthogonalen ausgerichteten Erfassungsoptik verwendet wird, und die erste und zweite Strahlungsquelle (18, 42) zusammen mit der Erfassungseinrichtung (26) bewegt wird, wobei zur Durchmesserbestimmung die Position des Auftreffbereichs der Strahlen der zweiten Strahlungsquelle (42) auf der Lauffläche im Erfassungsbereich (34) der Kamera (26) für die Ermittlung des Durchmessers der Zylinderbohrung (14) ausgewertet wird, und wobei für die Spot-Erkennung die Kamera den Auftreffbereich der Strahlen der ersten Strahlungsquelle (18) auf der Lauffläche in Form von Bildsignalen erfasst, und die Bildsignale auf das Auftreten benachbarter Hell/Dunkel-Bereiche untersucht werden, wobei das Vorliegen eines Spots angenommen wird, wenn die Fläche der Hell- und/oder Dunkelfläche eines benachbarten Hell/Dunkel-Bereichs eine festgelegte Referenzgröße überschreitet, wobei die zweite Strahlungsquelle (42) für die Durchmesserüberprüfung und die erste Strahlungsquelle (18) für die Spot-Erkennung verwendet werden und zusammen mit einer gemeinsamen Erfassungseinrichtung (26) und gemeinsam montiert an einem Trägerteil (12) zeitlich nacheinander verwendet werden.

## Beschreibung

Im Motorenbau werden Aluminium-Motorblöcke statt mit Stahllaufbuchsen mit einer Innenbeschichtung aus Stahl beschichtet (LDS-Beschichtung). Die Beschichtung kann z.B. im Plasma aufgebracht oder gespritzt werden. Die Dicke der Schicht liegt bei ca. 0,6mm und weist prozessbedingt eine hohe Oberflächenrauigkeit (bis 0,3mm) auf. Im Fehlerfall können bei der Beschichtung Fehlerstellen, sogenannte "Spots" entstehen, die eine Größe von mehreren mm erreichen können bzw. deren Größe außerhalb der für eine weitere Bearbeitung definierten Toleranz liegen. Die Fertigstellung der so entstandenen Zylinderlaufflächen wird durch Honen durchgeführt. Spots in der Laufläche verursachen entweder einen Ausbruch in der Beschichtung oder zerstören das Hohnwerkzeug.

Um festzustellen, wie stark die Beschichtung innerhalb der Lauffläche des Zylinders ist, muss der Durchmesser gemessen werden. Hierbei stellt die hohe Rauhtiefe der Beschichtung eine besondere Anforderung an die Vermessung. Taktile Messverfahren messen die höchsten Stellen der Beschichtung. Die durchgeführte Lasermessung ermittelt ein Durchschnittsmaß der Fläche. Zum Abgleich beider Messverfahren wird eine konstanter Offset verwendet, der primär von der Oberflächenrauhigkeit der Schicht abhängt. Bei zu geringer Schichtdicke treten Fehlstellen auf, bei zu starker Beschichtung kann das Hohnwerkzeug beschädigt werden. Fehlteile müssen vor dem Honen erkannt werden und die Motorblöcke aussortiert/nachbearbeitet werden.

Die DE 197 38 827 zeigt eine Vorrichtung zum Erkennen von Fehlerstellen in einer Zylinderbohrung, bei der die Strahlen einer Strahlungsquelle und eine Erfassungseinrichtung von einem Ende aus in eine Zylinderbohrung hinein gerichtet sind, um Fehlstellen in der Lauffläche der Zylinderbohrung zu erfassen.

Es ist daher Aufgabe der vorliegenden Erfindung, ein Verfahren zum Überprüfen einer Zylinderbohrung, insbesondere einer thermisch oder galvanisch beschichteten, z.B. LDS-beschichteten Zylinderbohrung, und eine Messvorrichtung zu schaffen, die es auf schnelle und einfache Weise erlauben, die Zylinderbohrung auf Durchmessermaßhaltigkeit und Fehlstellen zu überprüfen. Die Aufgabe wird gelöst durch ein Verfahren gemäß Anspruch 1 und durch eine Messvorrichtung gemäß Anspruch 11.

In dem erfindungsgemäßen Verfahren wird sowohl die Lauffläche einer thermisch oder galvanisch beschichteten, z.B. LDS-beschichteten Zylinderbohrung, insbesondere eines Durchmessers von 60 bis 100 mm, auf aus der Lauffläche hervorstehende Fehlerstellen (Spots), insbesondere in einer Größe von 5 bis 100 µm, überprüft und außerdem wird der Durchmessers der Zylinderbohrung ermittelt und zwar mit nur einer Messvorrichtung, die wenigstens eine zweite Strahlungsquelle und wenigstens eine erste Strahlungsquelle und wenigstens eine zum axialen Bewegen in der Zylinderbohrung konzipierte gemeinsame Erfassungseinrichtung enthält. Bei dem Verfahren wird die Lauffläche der Zylinderbohrung an axial unterschiedlichen Stellen durch die erste und zweite Strahlungsquelle in einem Winkel von 15 bis 75 Grad zur Achse der Zylinderbohrung bestrahlt und der Auftreffbereich der Strahlen auf der Lauffläche wird von der gemeinsamen Erfassungseinrichtung beim axialen Bewegen in der Zylinderbohrung erfasst. Als Erfassungseinrichtung wird eine Kamera mit einer zur Achse der Zylinderbohrung in etwa orthogonalen ausgerichteten Erfassungsoptik oder eine technisch gleichwirkende optische Erfassungseinrichtung verwendet. Die erste und zweite Strahlungsquelle wird zusammen mit der gemeinsamen Erfassungseinrichtung bewegt. Zur Durchmesserbestimmung wird die Position des Auftreffbereichs der Strahlen der zweiten Strahlungsquelle auf der Lauffläche im Erfassungsbereich der Kamera für die Ermittlung des Durchmessers der Zylinderbohrung ausgewertet, und für die Spot-Erkennung erfasst die Kamera den Auftreffbereich der Strahlen der ersten Strahlungsquelle auf der Lauffläche in Form von Bildsignalen. Diese Bildsignale werden auf das Auftreten benachbarter Hell/Dunkel-Bereiche untersucht, wobei das Vorliegen eines Spots angenommen wird, wenn die Fläche der Hell- und/oder Dunkelfläche eines benachbarten Hell/DunkelBereichs eine festgelegte Referenzgröße überschreitet. Die zweite Strahlungsquelle wird somit für die Durchmesserübeiprüfung und die erste Strahlungsquelle für die Spot-Erkennung verwendet. Diese sind zusammen mit der gemeinsamen Erfassungseinrichtung zusammen an einem Trägerteil montiert und werden zeitlich nacheinander verwendet. Somit kann durch die Erfindung in einem einzigen Messvorgang, d.h. während des Eintauchens und der Herausziehens der Messvorrichtung in die/aus der Zylinderbohrung die Spot-Erkennung als auch die Durchmessererfassung durchgeführt werden. Das Verfahren spart somit Zeit als auch Hardwareaufwand, da nur eine gemeinsame Erfassungseinrichtung verwendet werden muss. Selbstverständlich können an dem Trägerteil auch eigene Erfassungseinrichtungen für die erste und zweite Strahlungsquelle vorgesehen werden, ohne den Schutzbereich der Erfindung zu verlassen. Jedoch ist diese Lösung hinsichtlich des Hardwareaufwands nicht so günstig.

Vorzugsweise wird die Spot-Erkennung beim Hereinfahren des Trägerteils in die Zylinderbohrung und die Durchmesserprüfung beim Herausfahren durchgeführt, oder vice versa. Dies hat den Vorteil, dass beide Messungen in einem Tauchvorgang der Messvorrichtung in die Zylinderbohrung durchgeführt werden können.

Bei dem Verfahren wird die Lauffläche an axial unterschiedlichen Stellen der Zylinderbohrung durch die Strahlungsquelle in einen Winkel von etwa 15 bis 75 Grad, insbesondere 15 bis 60 Grad zur Achse der Zylinderbohrung bestrahlt. Die erste Strahlungsquelle für die Spot-Erkennung strahlt dabei die Zylinderbohrung über deren gesamte Umfang aus. Es wird eine erste Strahlungsquelle verwendet, die einen klar definierten Auftreffbereich auf der Lauffläche erzeugt, also jede Art paralleler Strahlung, insbesondere Laserstrahlung. Im Fall als erste Strahlungsquelle eine herkömmliche Lichtquellen, z.B. LEDs verwendet wird, sollte die Strahlung z.B. durch optische Maßnahmen soweit gebündelt sein, dass die Divergenz der Strahlen, insbesondere in axialer Richtung, nicht mehr als 15 Grad beträgt. Der so definierte Auftreffbereich der Strahlen der ersten Strahlungsquelle auf der Lauffläche wird von der Erfassungseinrichtung erfasst, die eine Erfassungsoptik mit einer quer zur Zylinderbohrung gerichteten Vorzugsrichtung aufweist. Die Erfassungsoptik muss natürlich nicht exakt orthogonal ausgerichtet sein, sondern kann von der orthogonalen Richtung abweichen, z.B. um + 10 Grad /- 30 Grad (+ bedeutet in Richtung der Strahlen der Strahlungsquelle, - bedeutet gegen die Richtung der Strahlungsquelle). So sollte zwischen den Strahlen der Strahlungsquelle und der Vorzugsrichtung der Erfassungsoptik des Erfassungsbereichs wenigstens ein Winkel von 30 Grad erreicht werden. Der Erfassungsbereich kann darüber hinaus sogar gegen die Richtung der Strahlen der Strahlungsquelle orientiert sein, wodurch der Erfassungsbereich einen Winkel größer 90 Grad relativ zu den Strahlen der Strahlungsquelle haben kann. Dies ist insbesondere deswegen vorzuziehen, weil dann hervorstehende Fehlstellen, sogenannte Spots besser als nebeneinander liegende Hell/Dunkel-Bereiche erkannt werden. Eine Orientierung der Erfassungsoptik des Erfassungsbereichs gegen die Strahlen liegt vor, wenn der Erfassungsbereich relativ zur achsnormalen Ebene der Zylinderbohrung gegenläufig orientiert ist.

Für die Durchmesserbestimmung wird die Position des Auftreffbereichs der Strahlen der zweiten Strahlungsquelle auf der Lauffläche im Erfassungsbereich der Erfassungseinrichtung ausgewertet. Insbesondere ist die Erfassungseinrichtung hier als Kamera ausgebildet und die Erfassung des Auftreffbereichs der Strahlen auf der Lauffläche erfolgt in einer Bildverarbeitung. Statt einer Kamera können jedoch auch andere optische Sensoren verwendet werden. Durch die Tatsache, dass die Strahlen von der zweiten Strahlungsquelle in einem Winkel auf die Lauffläche der Zylinderbohrung auftreffen, wandern die Auftreffpunkte der Strahlen auf der Lauffläche relativ zur zugeordneten Erfassungseinrichtung weiter nach oben, wenn der Durchmesser der Zylinderbohrung kleiner wird bzw. weiter nach unten, wenn der Durchmesser größer wird, was natürlich für den Fall gilt, dass die Strahlungsquelle oberhalb der Erfassungseinrichtung angeordnet ist. Im anderen Fall ist es umgekehrt.

Für die erste und zweite Strahlungsquelle kann eine gemeinsame Erfassungseinrichtung verwendet werden, wobei deren Signale jedoch für die beiden unterschiedlichen Messverfahren bzw. Strahlungsquellen unterschiedlich ausgewertet wird. Es versteht sich, dass die Messvorrichtung eine entsprechende Auswerteeinheit aufweist.

Bei der Durchmesserbestimmung ist mit der Position der Strahlungspunkte in dem Erfassungsbereich insbesondere die Position in axialer Richtung der Zylinderbohrung gemeint. Die Position der Strahlungspunkte der zweiten Strahlungsquelle in axialer Richtung in dem Erfassungsbereich zeigt an, ob der Durchmesser der Zylinderbohrung größer oder kleiner wird oder konstant ist. Statt Strahlungspunkten können auch Strahlungslinien verwendet werden, die eine größere Ausdehnung quer zur Achse der Zylinderbohrung haben können, da für die Durchmessererkennung nur die axiale Verschiebung der Strahlungspunkte maßgeblich ist. Die Punktförmigkeit der Strahlen ist in axialer dann gegeben, wenn die axiale Erstreckung der Strahlen deutlich geringer als die axiale Erstreckung des Erfassungsbereichs ist. So sollte die axiale Erstreckung der Strahlungspunkte maximal die Hälfte, besser maximal ein Drittel oder Viertel des Erfassungsbereichs betragen.

Prinzipiell ist es möglich, eine zweite Strahlungsquelle mit zwei Punktstrahlungsquellen vorzusehen, die radial um 180° versetzt abstrahlen. Dies würde jedoch für ein exaktes Erfassen des Durchmessers eine genau konzentrische Anordnung der zweiten Strahlungsquelle und des Erfassungsfensters der Erfassungseinrichtung im Zentrum der Zylinderbohrung voraussetzen. Deshalb werden vorzugsweise wenigstens drei Punktstrahlungsquellen als zweite Strahlungsquelle verwendet, die in möglichst äquidistanten Abständen, das heißt bei drei Punktstrahlungsquellen um 120° gegeneinander versetzt sind. Die Erfassungseinrichtung, vorzugsweise die Kamera, hat vorzugsweise einen 360° Erfassungsbereich, so dass diese in der Lage ist, alle drei Auftreffbereiche der Strahlen der Punktstrahlungsquelle auf der Lauffläche in einem axialen Bereich der Zylinderbohrung zu erfassen. Durch die axiale Position der definierten, vorzugsweise punktförmigen Auftreffbereiche im Erfassungsbereich kann somit überprüft werden, ob der Durchmesser zum einen axial innerhalb der Zylinderbohrung abweicht und zum anderen, ob der Durchmesser innerhalb einer gegebenen Sollwerttoleranz liegt. Die Erfassung der durch die Punktstrahlungsquellen erzeugten Auftreffbereiche auf der Lauffläche erfolgt vorzugsweise immer für einen axialen Abschnitt der Zylinderbohrung, d.h. für eine definierte Eintauchtiefe der Messvorrichtung in die Zylinderbohrung bzw. Zylinderlaufbuchse. Diese Messung wird dann bei andern Eintauchtiefen, z.B. vorzugsweise im Abstand von 2 bis 50 mm, insbesondere 3 bis 10 mm wiederholt, wodurch über die axiale Erstreckung der Zylinderbohrung ein Durchmesserprofil erhalten wird.

Der absolute Wert des Durchmessers kann sicher bestimmt werden, wenn vor der Vermessung der Zylinderbohrung eine Referenzmessung durchgeführt wird, in welcher die Messvorrichtung in einer Eichbohrung mit wenigstens einem definierten Durchmesser angeordnet wird. Die axialen Positionen der Auftreffbereiche der insbesondere punktförmigen Strahlen relativ zur Erfassungseinrichtung werden dann als Referenzwert zur Bestimmung des absoluten Durchmesserwertes der zu messenden Zylinderbohrung festgelegt. Hier wird eine Tabelle der LDS Täler erzeugt, mit der vorzugsweise über die gesamte axiale Erstreckung der Zylinderbohrung der vorab gemessene, mittlere Innendurchmesser korrigiert wird. Die Tiefe ändert sich am Anfang und Ende der Zylinderbohrung.

Vorzugsweise wird als zweite Strahlungsquelle eine Punktstrahlungsquelle verwendet, die einen genau definierten Auftreffbereich der Strahlen auf der Lauffläche generiert, der auf seine Position hin leicht automatisch ausgewertet werden kann. Selbstverständlich können auch lineare Strahlen verwendet werden, die jedoch nicht zu senkrechten Auftreffbereichen auf der Zylinderbohrung das heißt in axialer Richtung der Zylinderbohrung führen dürfen, weil die Durchmesserabweichung gerade über die axiale Verschiebung des Auftreffbereichs der Strahlen im Erfassungsbereich der Erfassungseinrichtung bestimmt wird. Es kann auch eine einzige zweite Strahlungsquelle verwendet werden, deren Strahlen aufgeteilt werden.

Hinsichtlich der Erkennung bzw. Detektion von Spots in LDS-beschichteten Laufflächen von Zylinderbohrungen ist folgende anzumerken. So wird bei LDS-beschichteten Zylinderbohrungen auf das Material des Zylinderblockes, zum Beispiel Aluminium, in einem laseraktivierten Plasmabeschichtungsverfahren eine äußerst harte Metallschicht aufgebracht, die in der Regel eine Dicke von weniger als 1 mm, insbesondere 0,6 mm, aufweist. Angesichts der Tatsache, dass prozessbedingt die im Plasmaverfahren aufgebrachte Schicht eine Oberflächenrauigkeit von bis zu 0,3 mm aufweist, muss das Vorliegen von Spots, das heißt von Erhöhungen, die mehrere Millimeter von der Oberfläche hervorstehen können, unbedingt vermieden werden. Derartige Spots führen beim nachträglichen Bearbeiten durch Honen entweder zu einem Ausbruch in der Beschichtung oder sie zerstören das Honwerkzeug. Daher wird zumindest ein Teil der Lauffläche, insbesondere die gesamte Lauffläche und über den gesamten Umfang der Zylinderbohrung, d.h. 360 Grad der Zylinderbohrung, durch die erste Strahlungsquelle in einem Winkel von 15 bis 75° zur Achse der Zylinderbohrung, insbesondere 15 bis 60°, bestrahlt, wobei die erste Strahlungsquelle vorzugsweise zusammen mit der Erfassungseinrichtung, insbesondere einer Kamera samt Erfassungsoptik in axialer Richtung in der Zylinderbohrung bewegt wird. Hierbei wird der Auftreffbereich der Strahlen der Beleuchtungseinrichtung auf der Lauffläche in Form von Bildsignalen erfasst und die Bildsignale werden auf das Auftreten benachbarter Hell/Dunkel-Bereiche untersucht, die dadurch entstehen, dass die schräg auf die Lauffläche auftreffende Strahlung der ersten Strahlungsquelle auf einen Spot trifft, wo oberhalb des Spots ein heller Bereich erzeugt wird und auf der der Strahlung abgewandten Seite des Spots ein dunkler Bereich. Fehlerquellen, wie zum Beispiel Spots, in der Lauffläche machen sich somit als benachbarte Hell/Dunkel-Bereiche bemerkbar. Die Präsenz eines Spots wird dann angenommen, wenn die Größe des Hell- und/oder Dunkelbereichs eine festgelegte Referenzgröße überschreitet. Referenzgrößen können damit allein für den Hell- oder Dunkelbereich oder für die zusammengefasste Fläche beider Bereiche festgelegt werden, je nachdem, welche Fläche man zur Spotdefinition nutzt. Die Referenzgröße kann auch nach einer Eichmessung in einer Referenzzylinderbohrung mit identischen Oberflächeneigenschaften basierend auf dem Signalrauschen bestimmt werden, welches nach Referenzmessung der rauen unbehandelten (nicht gehonten) LDS-Beschichtung der Referenzzylinderbohrung erhalten wird. Der Wert der Referenzgröße kann z.B. zwischen ¼ mm² und 10 mm² liegen. Die Referenzgröße kann auch ein relativer Wert bezogen auf die Amplitude des Signalrauschens sein.

Diese Hell/Dunkel-Bereiche können durch Aufbereitung der Bildsignale verstärkt werden, insbesondere zum einen durch Quadrieren der Helligkeitswerte über eine bestimmte Anzahl von Bildpunkten, um den Kontrast zu erhöhen, und andererseits durch eine Mittelung der Helligkeit über eine gewisse Anzahl benachbarter Punkte bzw. Offset mit Referenzdaten, um das Signalrauschen zu verringern. Auf diese Weise können sehr genau Fehlerstellen in der gesamten Lauffläche der Zylinderbohrung bestimmt werden. Falls eine derartige Fehlerstelle gefunden wird, kann der Motorblock entweder zur Nachbearbeitung gegeben werden oder als Ausschussstück aus der Produktion genommen werden. Das erfindungsgemäße Verfahren prüft zumindest einen Teil der Lauffläche, vorzugsweise die gesamte Lauffläche optisch auf Spots. Die Form der Spots, z.B. Fäden, Kugeln, Pyramiden, wird erkannt und kann zur Optimierung des LDS Prozesses verwendet werden.

Vorzugsweise hat die erste Strahlungsquelle eine Vielzahl von auf einem Kreis angeordneten Strahlungsquellen, insbesondere LED-Strahlungsquellen, wodurch eine kreisförmige Strahlungsquelle erzeugt wird, die den gesamten Innenbereich der Lauffläche über 360° möglichst gleichmäßig ausleuchtet. Vorzugsweise ist auch die zugehörige Erfassungseinrichtung als Kamera mit einem 360°-Erfassungswinkel vorzugsweise mit einer Erfassungsoptik in radialer Richtung der Zylinderbohrung ausgebildet, so dass die Kamera den gesamten Auftreffbereich der kreisförmigen Strahlung auf der Lauffläche über 360° erfassen kann. Auf diese Weise kann eine gesamte Lauffläche leicht auf Fehler untersucht werden, wenn die 360°-Aufnahme in geringen axialen Abständen wiederholt oder unter kontinuierlicher axialer Bewegung der Messvorrichtung durchgeführt wird. Jeder Spot führt auf der lichtbeschienen Seite, d.h. auf der Seite von der die Strahlung schräg einfällt, zu einer hellen Stelle im Bild und auf der lichtabgewandten Seite zu einer dunklen Stelle, direkt angrenzend an die helle Stelle. Das Vorliegen eines benachbarten Hell/Dunkel-Bereichs im erfassten Bild deutet somit auf eine Fehlerstelle, insbesondere einen Spot hin. Auch hier kann die Erfassungsoptik der Erfassungseinrichtung (Kamera) gegen die Strahlenuchtung der Strahlungsquelle orientiert sein

Die Position einer Fehlerstelle in der Zylinderbohrung kann leicht aus der axialen Position der Messvorrichtung in der Zylinderbohrung und dem Sektor bestimmt werden, in welchem die Erfassungseinrichtung, das heißt die Kamera, einen Hell/Dunkel-Bereich erkennt.

In einer vorteilhaften Weiterbildung des erfindungsgemäßen Verfahrens wird vor dem Vermessen der Zylinderbohrung eine Referenzmessung durchgeführt, in welcher die Messvorrichtung in einer Zylinderbohrung mit einer Referenzlauffläche angeordnet wird, die die gleichen Oberflächeneigenschaften wie die zu messende Zylinderbohrung hat. Bei dieser Referenzmessung tritt die Oberflächenrauigkeit der Referenzlauffläche als Signalrauschen des Bildsignals auf, welches bei der anschließenden Vermessung einer Zylinderbohrung gefiltert werden kann (Offset). Aus der Referenzmessung kann auch die Referenzgröße für die Spotdefinition abgeleitet werden.

Wie oben bereits zum Ausdruck gebracht, eignet sich das erfindungsgemäße Verfahren insbesondere zur Spoterkennung von LDS-beschichten Zylinderbohrungen in Zylinderblöcken von Verbrennungsmotoren.

LDS steht für Laser Direct Structuring, bei welchem durch laserinitiiertes Generieren eines Plasmas in der Zylinderbohrung eine äußerst harte Oberflächenschicht erzeugt wird, welche die Lauffläche für den Kolben eines Verbrennungsmotors bildet, natürlich nach mechanischer Feinbearbeitung (Honen). Der Vorteil dieser Technologie besteht darin, dass die vergleichsweise schwere Hartmetallschicht äußert dünn auf den Leichtmetallmotorblock aufgetragen werden kann, womit Material und Gewicht eingespart wird.

Die Erfindung betrifft weiterhin eine Messvorrichtung zum Überprüfen einer Zylinderbohrung auf Maßhaltigkeit (Durchmesser) und Fehlerstellen (Spots), umfassend wenigstens eine erste und zweite Strahlungsquelle, die zusammen mit wenigstens einer zugehörigen Erfassungseinrichtung an einem Trägerteil montiert sind zur axial beweglichen Führung in der Zylinderbohrung. Beide Strahlungsquellen sind zur Abgabe eines definierten Strahls in einem Winkel von 15 bis 75 Grad zur Bewegungsachse auf eine Lauffläche einer Zylinderbohrung konzipiert. Die wenigstens eine Erfassungseinrichtung ist dazu konzipiert, den auf die Lauffläche auftreffenden Lichtstrahl der beiden Strahlungsquellen zu erfassen, und wobei die zweite Strahlungsquelle wenigstens drei Punktstrahlungsquellen, insbesondere Punktlaser aufweist, die vorzugsweise in einem Winkelabstand von 360 Grad geteilt durch die Anzahl der Punktstrahlungsquellen abstrahlen und die erste Strahlungsquelle die Zylinderbohrung über den gesamten Umfang ausstrahlt.

Vorzugsweise hat die Erfassungseinrichtung eine Erfassungsoptik in radialer Vorzugsrichtung oder sogar gegen die Strahlen der Strahlungsquelle orientiert. Vorzugsweise sind die beiden Strahlungsquellen und die wenigstens eine Erfassungseinrichtung, die vorzugsweise als Kamera ausgebildet sein kann, mechanisch in der Messvorrichtung in einer definierten wechselseitigen Stellung miteinander verbunden, z.B. an dem Trägerteil montiert, so dass immer die beiden Strahlungsquellen zusammen mit der wenigstens einen zugehörigen Erfassungseinrichtung in der Zylinderbohrung bewegt werden. Die Messvorrichtung ist insbesondere ausgebildet für die Durchführung der beiden oben genannten Prüf- bzw. Messverfahren, d.h. Durchmesserbestimmung als auch Spot-Erkennung.

Die Erfassungseinrichtung erfasst in ihrem Erfassungsbereich den Auftreffbereich der von der Strahlungsquelle abgegebenen Strahlung auf der Lauffläche der Zylinderbohrung. Durch die axiale Position des Auftreffbereichs im Erfassungsbereich der Erfassungseinrichtung kann auf den Durchmesser der Zylinderbohrung im Erfassungsbereich rückgeschlossen werden und aus dem Vorliegen von benachbarten Hell/Dunkel-Bereichen (siehe oben) kann auf das Vorliegen von Fehlstellen, insbesondere Spots, geschlossen werden.

Vorzugsweise weist eine erste Strahlungsquelle mehrere Strahlungsquellen, insbesondere LEDs, auf, die vorzugsweise auf einem Kreisbogen angeordnet sind. Diese Strahlungsquellen sollten einen gleichmäßigen Auftreffbereich der Strahlung auf der Lauffläche erzeugen. Mit einer derartigen ersten Strahlungsquelle kann die Lauffläche sehr gut auf Fehlerstellen, insbesondere Spots, überprüft werden.

Die zweite Strahlungsquelle der Messvorrichtung hat vorzugsweise wenigstens drei Strahlungsquellen mit definierter Strahlung, insbesondere Punktlaser, die vorzugsweise in äquidistanten Abständen um die Achse der Messvorrichtung angeordnet sind. Diese Punktstrahlungsquellen sollten eine Strahlung abgeben, die nur minimal divergiert, zum Beispiel maximal 10°. Insbesondere wird paralleles Licht, insbesondere Laserlicht, verwendet. Die drei zum Beispiel um 120° zueinander versetzten Punktstrahlungsquellen der zweiten Strahlungsquelle führen in einem axialen Level der punktförmigen Auftreffbereiche auf der Lauffläche, und können in einem Lasertriangulationsverfahren zur Bestimmung des Durchmessers verwendet werden. Denn durch die Position dieser drei Auftreffpunkte im Erfassungsbereich der Kamera kann somit direkt auf den Durchmesser der Zylinderbohrung geschlossen werden.

Vorzugsweise sind die Erfassungseinrichtung und die erste und zweite Strahlungsquelle an einem Trägerteil gehalten, das vorzugsweise mittels einer Linearführung in der Zylinderbohrung axial beweglich ist. Auf diese Weise kann auf einfache Weise die gesamte Lauffläche einer Zylinderbohrung auf die Einhaltung eines Solldurchmessers überprüft werden. Selbstverständlich können auch mehr als drei Strahlungspunkte, z.B. vier bis zehn Strahlungspunkte verwendet werden. Hierbei wird dann der Strahl einer Punktstrahlungsquelle entweder entsprechend aufgeteilt oder eine entsprechende Anzahl an separaten Punktstrahlungsquellen verwendet.

Mit Erfassungsbereich der Erfassungseinrichtung ist derjenige Bereich der Lauffläche der Zylinderbohrung bezeichnet, der von der Erfassungseinrichtung erfasst wird.

Das Trägerteil der Messvorrichtung sollte möglichst konzentrisch durch eine Halterung mittels eines Führungsschlittens in der Zylinderbohrung axial geführt werden, wobei eine exakt konzentrische Ausrichtung nicht notwendig ist. Aufgrund der Verwendung einer zweiten Strahlungsquelle mit wenigstens drei Punktstrahlungsquellen für die Durchmessererfassung ist auch eine leicht azentrische Anordnung der Komponenten der Messvorrichtung in der Zylinderbohrung unschädlich.

Die erste als auch zweite Strahlungsquelle kann derart ausgerichtet sein, dass sie die Strahlung direkt in dem gewünschten Winkel von 15 bis 75° auf die Lauffläche der Zylinderbohrung richtet. Sie kann jedoch auch in eine andere Richtung orientiert sein, zum Beispiel in axialer Richtung, wo die Strahlung dann z.B. durch eine Spiegelanordnung in dem gewünschten Winkel von 15 bis 75° auf die Lauffläche der Zylinderbohrung umgelenkt wird. Die Anordnung mit einer Spiegelanordnung lässt eventuell größere Freiheitsgrade hinsichtlich des Aufbaus und der Anordnung der Strahlungsquelle(n) zu.

Die zweite Strahlungsquelle für die Durchmesserüberprüfung und die erste Strahlungsquelle für die Spot-Erkennung können zusammen an dem Trägerteil montiert sein. Für beide Messungen kann die identische Erfassungseinrichtung verwendet werden. In diesem Fall ist es z.B. vorteilhaft, beim Hereinfahren in die Zylinderbohrung die Spot-Erkennung durchzuführen und beim Herausfahren die Durchmesserüberprüfung. Man hat somit in einem Tauchvorgang beide der Messvorrichtung beide Prüfungen miteinander kombiniert. Die beiden Strahlungsquellen können jedoch auch austauschbar an dem Trägerteil angeordnet sein.

Vorzugsweise ist als z.B. gemeinsame Erfassungseinrichtung für beide Strahlungsquellen eine Kamera im Zentrum des Trägerteils angeordnet, welche Kamera mittels einer 360 Grad-Optik einen Erfassungsbereich von 360° quer zur Bewegungsrichtung des Trägerteils aufweist. Auf diese Weise kann mit einer axialen Bewegung der Kamera über die axiale Länge der Zylinderbohrung die gesamte Lauffläche der Zylinderbohrung schnell und effektiv überprüft werden.

In einer Ausführungsform der Erfindung ist die erste und/oder zweite Strahlungsquelle austauschbar an dem Trägerteil befestigt. Dies ermöglicht es, die entsprechende Strahlungsquelle für eine Durchmessererfassung der Zylinderbohrung gegen eine Strahlungsquelle für eine Fehlerstellenbestimmung auszutauschen. Für eine Durchmessererfassung wird vorzugsweise die zweite Strahlungsquelle mit wenigstens drei Punktstrahlungsquellen, insbesondere Laserstrahlungsquellen, verwendet, während für eine Fehlerstellenbestimmung möglichst die erste Strahlungsquelle verwendet wird, welche vorzugsweise über den gesamten Umfang eine gleichmäßige Ausleuchtung der Zylinderbohrung über 360° gewährleistet. Dies ist zum Beispiel bei einem LED-Array gewährleistet, welches z.B. auf einem ringförmigen Fortsatz des Trägerteils angeordnet ist. Somit kann durch einen einfachen Austausch der Strahlungsquelle die Messvorrichtung auf die Überprüfung des Durchmessers bzw. von Fehlerstellen, wie zum Beispiel Spots, geändert werden. Es ist jedoch vorzuziehen, beide Strahlungsquellen gemeinsam auf der Messvorrichtung anzuordnen, in welchem Fall diejenige Strahlungsquelle betätigt wird, die für die entsprechende Messung gerade benötigt wird.

Es wäre prinzipiell möglich, die Strahlungsquellen und die Erfassungseinrichtung relativ zueinander bewegbar an der Messvorrichtung anzuordnen. Dies würde jedoch zusätzliche Maßnahmen zur Auswertung des Erfassungsbereichs der Erfassungseinrichtung notwendig machen. Deswegen ist vorzugsweise die Strahlungsquelle in einer festen definierten Position relativ zur Erfassungseinrichtung gehalten. Somit wird bei einer Vermessung einer Zylinderbohrung die Strahlungsquelle zusammen mit der Erfassungseinrichtung, insbesondere festgelegt am Trägerteil, axial in der Zylinderbohrung bewegt.

Die oben beschriebenen Ausführungsformen der Erfindung sind in beliebiger Weise miteinander kombinierbar.

Vorzugsweise wird eine kombinierte Oberflächen-Inspektion auf Spots und auf Durchmesserstimmigkeit in einem Arbeitsgang, vorzugsweise mit Hilfe eines Bildverarbeitungssystems durchgeführt. Die Kamera hierbei ist hierbei vorzugsweise mit einer 360° Erfassungsoptik ausgestattet, welche die Zylinderlauffläche z.B. in einem Bereich von ca. 15mm als Abwicklung darstellt. Während des Prüf- bzw. Messvorgangs wird die Messvorrichtung mit der Erfassungseinrichtung in die Zylinderbohrung eingefahren unter Verwendung einer ersten Strahlungsquelle, insbesondere eines ringförmig angeordneten LED-Arrays. Dabei werden 30-40 Bilder aufgenommen, welche zur Oberflächen-Inspektion auf Spots herangezogen werden. Danach fährt die Messvorrichtung wieder aus der Zylinderbohrung heraus, wobei von der ersten Strahlungsquelle auf eine zweite Strahlungsquelle mit Punktstrahlungsquellen, insbesondere Punktlaserquellen, umgeschaltet wird. Nun wird im Lasertriangulationsverfahren die oben beschriebene Durchmesservermessung der Zylinderbohrung durchgeführt.

Vorzugsweise umfasst die Messvorrichtung eine Abstandsmessanordnung mit einem Auflösung bzw. Genauigkeit kleiner 40 µm, vorzugsweise einer Messpunktgröße von 10 bis 40 µm, vorzugsweise kleiner 20 µm, und insbesondere kleiner 10 µm, zur Korrektur des über die zweite Strahlungsquelle und die Erfassungseinrichtung ermittelten mittleren Durchmesserwertes. So kann mittels der Abstandanordnung eine vertikale Korrekturtabelle für den Durchmesser erstellt werden, wobei die Werte z.B. in einem axialen Abstand von 5mm erfassst werden. Auf diese Weise lässt sich mittels der Korrekturtabelle ein freier minimaler Durchmesserwert ermitteln, der benötigt wird, damit ein erstes von mehreren Honwerkzeugen nicht von zu hohen Punkten im Bereich der Rauhigkeit der Oberfläche der Zylinderbohrung, die nicht als Spots definiert sind, gleich zerstört wird.

In diesem Fall hat die Abstandmessanordnung vorzugsweise eine dritte Strahlungsquelle und einen zugeordneten optischen Sensor, die separat oder integriert ausgebildet sein können. Die Strahl- und Erfassungsrichtung der Abstandmessanordnung ist relativ zur Bewegungsrichtung des Trägerteils vorzugsweise quer ausgerichtet.

Die Erfindung wird nun anhand einer schematischen Zeichnung beschrieben. In dieser zeigen:
- Fig. 1: eine teilgeschnittene Seitenansicht einer in einer Zylinderbohrung angeordneten Messvorrichtung mit einem Strahlenverlauf einer ersten Strahlungsquelle, und
- Fig. 2: eine teilgeschnittene Ansicht der Messvorrichtung aus Fig. 1, mit einem Strahlenverlauf einer zweiten Strahlungsquelle, und
- Fig. 3: den von einer Abstandmessanordnung der Messvorrichtung erfassten axialen Abstandsverlauf.

Die erfindungsgemäße Messvorrichtung 10 umfasst ein Trägerteil 12, welches in axialer Richtung x in einer Zylinderbohrung 14 eines Motorblockes 16 mittels eines nicht dargestellten Führungsschlittens bewegbar ist. Das Trägerteil 12 trägt als erste Strahlungsquelle ein LED-Array 18, welches auf einer Kreisbahn an einem ringförmigen Fortsatz 20 des Trägerteils 12 gehalten ist, so dass dessen emittierte Strahlen 22 unter einem Winkel (relativ zur Achse x der Zylinderbohrung) von etwa 15 bis 60° direkt auf die Lauffläche 24 der Zylinderbohrung 14 auftrifft. Dieser Auftreffbereich wird erfasst durch eine Erfassungseinrichtung 26, die durch eine Kamera 28 mit einem Vorsatzobjektiv 30 und einer 360°-Optik 32 gebildet ist, so dass sich durch die Erfassungseinrichtung 26 ein ringförmiger und zur Lauffläche 24 hin etwas aufgeweiteter Erfassungsbereich 34 ergibt, welcher den gesamten Auftreffbereich der Strahlung abdeckt oder zumindest einen Großteil davon. Das Trägerteil 12 wird mittels des Führungsschlittens in axialer Richtung x über die gesamte Lauffläche 24 der Zylinderbohrung 14 bewegt, wobei Fehlerstellen in der Lauffläche 24 in dem Erfassungsbereich 34 der Erfassungseinrichtung 26 als benachbarte Hell/Dunkel-Bereiche erkannt werden. Zusätzlich trägt das Trägerteil eine Abstandsmessanordnung 38, mit der ein genaues axiales Abstandsprofil aufgezeichnet wird, welches zur Korrektur des mittels der zweiten Strahlungsquelle 42 erhaltenen Durchmesserwertes verwendet wird, um einen korrigierten minimalen Durchmesserwert zu erhalten. Die Messstrahlung 40 der Abstandsmessanordnung verläuft quer zur Achse des Trägerteils 12 und der Achse x der Zylinderbohrung 14.

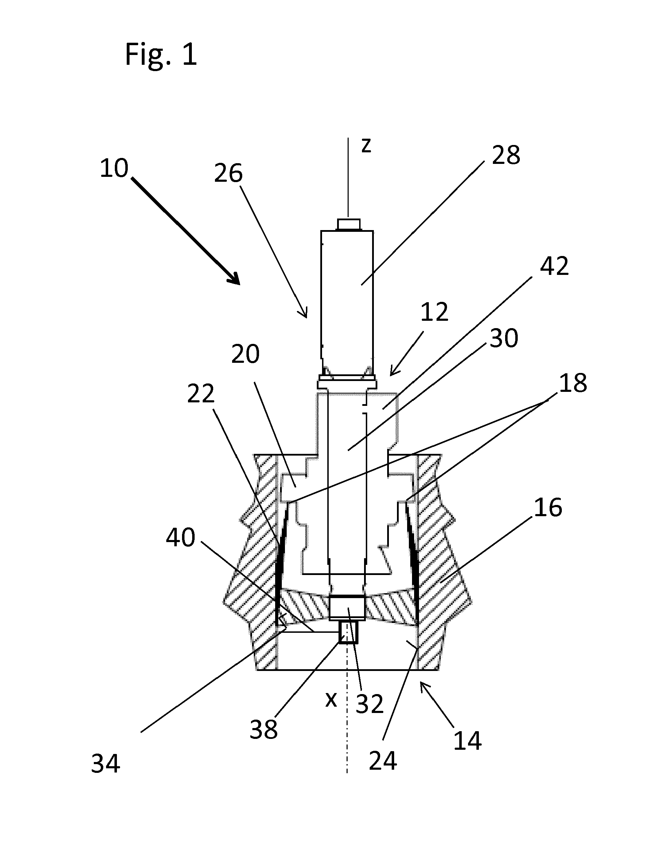

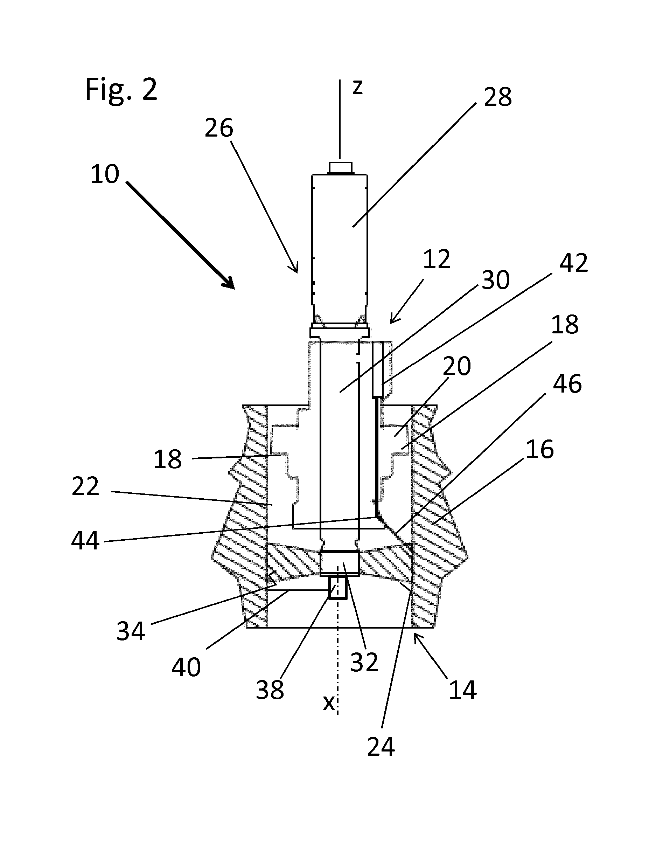

Fig. 2 zeigt eine zweite Strahlungsquelle 42 der Messvorrichtung 10 aus Fig. 1, die für eine Durchmesserübeiprüfung der Zylinderbohrung verwendet wird. Identische oder funktionsgleiche Teile sind hierbei mit identischen Bezugszeichen versehen. Das Trägerteil 12 trägt zusätzlich zu der ersten Strahlungsquelle 18 eine zweite Strahlungsquelle 42, die aus drei um die zentrale Achse Z des Trägerteils äquidistant verteilten Laserpunktstrahlungsquellen 42 gebildet ist. Deren drei diskrete Strahlen werden an einer Spiegelanordnung 44 in einem Winkel von 15 bis 60° auf die Lauffläche 24 reflektiert. Es ergeben sich damit drei um 120° versetzte punktförmige Auftreffbereiche der Laserstrahlen 46 auf der Lauffläche 24. Wenn der Durchmesser der Zylinderbohrung 14 sich vergrößert, wandern die Auftreffpunkte des Laserstrahls 46 auf der Zylinderwandung 24 im Erfassungsbereich 34 der Erfassungseinrichtung 26 weiter nach unten und wenn der Durchmesser geringer wird, entsprechend weiter nach oben. Damit kann durch die Position der Auftreffpunkte der drei Laserstrahlen 46 im Erfassungsbereich 34 in axialer Richtung X der Durchmesser der Zylinderbohrung 14 erfasst werden (Lasertriangulation). Vorzugsweise wird beim Betrieb der zweiten Strahlungsquelle 42 die erste Strahlungsquelle 18 abgeschaltet.

Vorzugsweise wird vorher eine Referenzmessung an einer Referenzzylinderbohrung durchgeführt, welche wenigstens einen definierten Durchmesser hat. Dieser definierte Durchmesser führt dann zu einer definierten axialen Position der drei Laserpunkte im Erfassungsbereich. Diese Punkte werden als Referenzpunkte im entsprechend definierten Durchmesser der Referenzzylinderbohrung zugemessen.

Wenn die Referenzzylinderbohrung zwei unterschiedliche Durchmesserbereiche hat, werden zwei axial unterschiedliche positionierte Auftreffbereiche erhalten, aus denen sich durch lineare Interpolation der Absolutwert jedes gemessenen Durchmessers bestimmen lässt.

Mit der Messvorrichtung 10 wird vorzugsweise beim Hineinfahren in die Zylinderbohrung 14 mittels der ersten Strahlungsquelle 18 die Spot-Erkennung durchgeführt und beim Herausfahren der Messvorrichtung 10 aus der Zylinderbohrung 14 wird die zweite Strahlungsquelle 42 (die drei Punktlaserquellen ) eingeschaltet, um im Lasertriangulationsverfahren die Durchmesserbestimmung durchzuführen, oder umgekehrt.

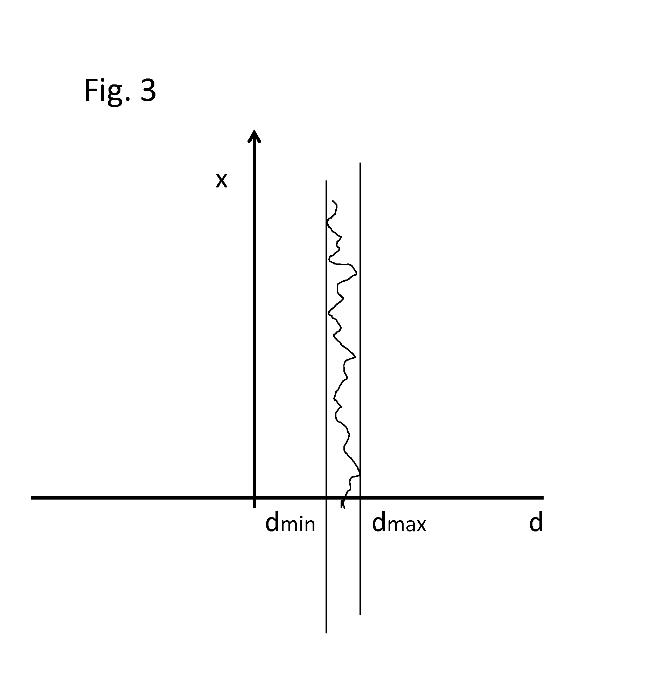

Fig. 3 zeigt das von der Abstandsmessanordnung 38 aufgenommene axiale Abstandsdiagramm bei welcher der gemessen Abstand d über die axiale Position x der Abstandsmessanordnung in der Zylinderbohrung aufgezeichnet ist. Aus dem Abstandsdiagramm lassen ich die maximalen und minimalen Abstandswert dₘₐₓ und dₘᵢₙ ermitteln. Die Differenz dieser beiden Extremwerte ergibt die Rauhigkeit oder Rauhtiefe der Oberfläche. Der mittels der zweiten Strahlungsquelle 42 und der Erfassungseinrichtung 26 ermittelte Durchmesserwert wird vorzugsweise durch Subtrahieren der halben Rauhtiefe positionsabhängig in der Zylinderbohrung korrigiert.

Die Erfindung ist nicht auf das oben beschriebene Ausführungsbeispiel beschränkt, sondern kann innerhalb des Schutzbereiches der nachfolgenden Ansprüche variiert werden.

## Patentansprüche

1. Verfahren zum Überprüfen der Lauffläche einer thermisch oder galvanisch beschichteten Zylinderbohrung (14) auf aus der Lauffläche hervorstehende Fehlerstellen (Spots) und zum Überprüfen des Durchmessers der Zylinderbohrung (14) mit einer Messvorrichtung (10), die wenigstens eine zweite Strahlungsquelle (42) und wenigstens eine erste Strahlungsquelle (18) und wenigstens eine zum axialen Bewegen in der Zylinderbohrung konzipierte Erfassungseinrichtung (26) enthält, bei welchem Verfahren die Lauffläche (24) der Zylinderbohrung (14) an axial unterschiedlichen Stellen durch die erste und zweite Strahlungsquelle in einem Winkel von 15 bis 75 Grad zur Achse der Zylinderbohrung bestrahlt und der Auftreffbereich der Strahlen auf der Lauffläche von der Erfassungseinrichtung beim axialen Bewegen in der Zylinderbohrung erfasst (34) wird, wobei als Erfassungseinrichtung eine Kamera mit einer zur Achse der Zylinderbohrung in etwa orthogonalen ausgerichteten Erfassungsoptik verwendet wird, und die erste und zweite Strahlungsquelle (18, 42) zusammen mit der Erfassungseinrichtung (26) bewegt wird, wobei zur Durchmesserbestimmung die Position des Auftreffbereichs der Strahlen der zweiten Strahlungsquelle (42) auf der Lauffläche im Erfassungsbereich (34) der Kamera (26) für die Ermittlung des Durchmessers der Zylinderbohrung (14) ausgewertet wird, und wobei für die Spot-Erkennung die Kamera den Auftreffbereich der Strahlen der ersten Strahlungsquelle (18) auf der Lauffläche in Form von Bildsignalen erfasst, und die Bildsignale auf das Auftreten benachbarter Hell/Dunkel-Bereiche untersucht werden, wobei das Vorliegen eines Spots angenommen wird, wenn die Fläche der Hell- und/oder Dunkelfläche eines benachbarten Hell/Dunkel-Bereichs eine festgelegte Referenzgröße überschreitet, wobei die zweite Strahlungsquelle (42) für die Durchmesserübeiprüfung und die erste Strahlungsquelle (18) für die Spot-Erkennung verwendet und zusammen mit der wenigstens einen Erfassungseinrichtung (26) gemeinsam an einem Trägerteil (12) montiert zeitlich nacheinander verwendet werden.

2. Verfahren nach Anspruch 1, bei dem die Spot-Erkennung beim Hereinfahren des Trägerteils in die Zylinderbohrung und die Durchmesserprüfung beim Herausfahren durchgeführt werden, oder vice versa.

3. Verfahren nach Anspruch 1 oder 2, bei dem wenigstens drei Strahlungspunkte von Punktstrahlungsquellen der zweiten Strahlungsquelle (42) auf die Lauffläche gerichtet und von der Erfassungseinrichtung (26) ausgewertet werden.

4. Verfahren nach einem der vorhergehenden Ansprüche, bei dem als zweite Strahlungsquelle (42) wenigstens eine Laserstrahlungsquelle, insbesondere Punktlaserquelle verwendet wird.

5. Verfahren nach einem der vorhergehenden Ansprüche, bei dem vor dem Vermessen der Zylinderbohrung (14) eine Referenzmessung durchgeführt wird, in welcher die Messvorrichtung (10) in einer Eichbohrung mit wenigstens einem definiertem Durchmesser angeordnet wird, und die Position des Auftreffbereichs der Strahlen relativ zur Erfassungseinrichtung als Referenz zur Bestimmung des absoluten Durchmesserwertes verwendet wird.

6. Verfahren nach einem der vorhergehenden Ansprüche, bei dem zur Durchmesserbestimmung ein Lasertriangulationsverfahren mit wenigstens drei Punktlasern (42) als zweiter Strahlungsquelle und als Erfassungseinrichtung (26) eine Kamera (28) mit 360 Grad-Optik verwendet wird.

7. Verfahren nach einem der vorhergehenden Ansprüche, bei dem eine erste Strahlungsquelle (18) mit einer Vielzahl von ringförmig (20) angeordneten Strahlungsquellen, insbesondere LED-Strahlungsquellen verwendet wird.

8. Verfahren nach einem der vorhergehenden Ansprüche, bei dem vor dem Vermessen der Zylinderbohrung (14) eine Referenzmessung durchgeführt wird, in welcher die Messvorrichtung (10) in einer Zylinderbohrung (14) mit einer Referenzlauffläche angeordnet wird, die die gleichen Oberflächeneigenschaften wie die zu messende Zylinderbohrung hat, in welcher Referenzmessung die Oberflächenrauhigkeit der Referenzlauffläche als Signalrauschen des Bildsignals ermittelt und das bei der Referenzmessung ermittelte Signalrauschen aus dem erhaltenen Messsignal gefiltert wird.

9. Verfahren nach einem der vorhergehenden Ansprüche, bei dem die Position eines Hell/Dunkelbereichs in der Lauffläche (24) aus der axialen Position der Messvorrichtung (10) in der Zylinderbohrung (14) und dem Sektor des Hell/Dunkelbereichs bestimmt wird.

10. Verfahren nach einem der vorhergehenden Ansprüche, bei dem für beide Strahlungsquellen (18, 42) eine gemeinsame Erfassungseinrichtung (26) verwendet wird.

11. Messvorrichtung (10) zum Überprüfen einer Zylinderbohrung (14) auf Durchmessermaßhaltigkeit und Fehlstellen, umfassend wenigstens eine erste und zweite Strahlungsquelle (18; 42), die zusammen mit wenigstens einer Erfassungseinrichtung (26) an einem Trägerteil (12) montiert sind zur axial beweglichen Anordnung in der Zylinderbohrung (14), wobei die beiden Strahlungsquellen (18, 42) zur Abgabe eines Strahls (22; 46) in einem Winkel von 15 bis 75 Grad zur Bewegungsachse auf eine Lauffläche (24) der Zylinderbohrung (14) konzipiert sind, und die wenigstens eine Erfassungseinrichtung (26) dazu konzipiert ist, den auf die Lauffläche auftreffenden Strahl (22; 46) der Strahlungsquellen (18, 42) zu erfassen (34), und wobei die zweite Strahlungsquelle (42) wenigstens drei Punktstrahlungsquellen, insbesondere Punktlaser aufweist, die vorzugsweise in einem Winkelabstand von 360 Grad geteilt durch die Anzahl der Punktstrahlungsquellen abstrahlen, und die erste Strahlungsquelle (18) dazu konzipiert ist, über den gesamten Umfang in die Zylinderbohrung (14) abzustrahlen.

12. Messvorrichtung (10) nach Anspruch 11, bei der die erste Strahlungsquelle (18) mehrere LEDs (18) aufweist, die vorzugsweise ringförmig (20) an dem Trägerteil (12) angeordnet sind.

13. Messvorrichtung (10) nach einem der Ansprüche 11 bis 12, bei welcher die Erfassungseinrichtung (26) eine Kamera (28), insbesondere eine Kamera mit einem zirkularen Erfassungsbereich (34) von 360 Grad quer zur Bewegungsachse (x) ist.

14. Messvorrichtung (10) nach einem der Ansprüche 11 bis 13, bei welcher für beide Strahlungsquellen (18; 42) eine gemeinsame Erfassungseinrichtung (26) ausgebildet ist.

15. Messvorrichtung (10) nach einem der Ansprüche 11 bis 14, bei der eine, insbesondere zirkulare, Spiegelanordnung (44) an dem Trägerteil (12) gehalten ist, um die Strahlen (46) von der zweiten Strahlungsquelle (42) auf die Lauffläche (24) zu richten.

16. Messvorrichtung nach einem der Ansprüche 11 bis 15, umfassend eine Abstandsmessanordnung (38) mit einem Genauigkeit kleiner 10 µm, zur Korrektur des über die zweite Strahlungsquelle und die Erfassungseinrichtung (26) ermittelten Durchmesserwertes.

17. Messvorrichtung (10) nach Anspruch 16, bei welchem die Abstandmessanordnung (38) eine dritte Strahlungsquelle und einen zugeordneten optischen Sensor aufweist, dessen Strahlrichtung (40) relativ zur Bewegungsrichtung des Trägerteils (12) quer ausgerichtet.
